# EUROPEAN PATENT SPECIFICATION

(11) **EP 2 179 865 B1**
(45) Date of publication and mention of the grant of the patent: **01.02.2012**
(21) Application number: 09171310.7
(22) Date of filing: 25.09.2009
(51) Int. Cl.: B60C 1/00, C08K 3/34, C08L 9/00, C08L 9/06, C08L 21/00, C08L 65/00

(54) **Rubber composition and pneumatic tire therewith**
Kautschukzusammensetzung und Luftreifen
Composition de caoutchouc et pneu

(30) Priority: 30.09.2008 US 241472
(43) Date of publication of application: 28.04.2010
(73) Proprietor: The Goodyear Tire & Rubber Company, Akron, OH 44316-0001 (US)
(72) Inventor: Sandstrom, Paul Harry, Cuyahoga Falls, OH 44223 (US); Zhang, Ping, Hudson, OH 44236 (US); Yang, Xiaoping, Streesboro, OH 44241 (US); Kulig, Joseph John, Tallmadge, OH 44278 (US); Puhala, Aaron Scott, Kent, OH 44240 (US); Dando, Rebecca Lee, Uniontown, OH 44685 (US)
(74) Representative: Kutsch, Bernd

(56) References cited:
- EP-A1- 0 575 801
- EP-A1- 1 801 158
- EP-A1- 1 902 865
- GB-A- 1 503 387
- US-A- 4 898 223
- US-A1- 2005 020 753
- US-A1- 2008 142 131

## Description

### Background of the Invention

A combination of nanoclay with a functionalized ESBR through a masterbatching process leads to rubber compositions with good abrasion resistance and low hysteresis. However, the processability of these rubber compositions is not as good as rubber compositions based on carbon black, perhaps mostly due to strong polymer-filler interaction in the uncured state. It is therefore desirable to improve the processability and to further enhance the abrasion resistance of the clay nanocomposite rubber composition in order to take advantage of the good hysteresis property and other cured properties of such rubber composition.

EP-A- 1 801 158, US-A- 2005/0020753 and US-A- 2008/142131 each describe a rubber composition comprising a vinylpyridine-styrene-butadiene elastomer comprising units derived from monomers comprising styrene, 1,3-butadiene, and vinylpyridine monomers having the structural formula of claim 1, as well as exfoliated clay.

EP-A- 1 902 865, US-A- 4,898,223 and EP-A- 0 575 801 each describe the use of polyoctenamer in rubber compositions for tire treads. GB-A- 1 503 387 also describes a vulcanizable rubber composition containing polyoctenamers.

### Summary of the Invention

The present invention is directed to a rubber composition according to claim 1 and to a tire according to claim 11.

Dependent claims refer to preferred embodiments of the invention.

### Detailed Description of the Invention

There is disclosed a rubber composition and a pneumatic tire comprising at least one component, the at least one component comprising a rubber composition, the rubber composition comprising

from 50 to 100 parts by weight, per 100 parts by weight of elastomer, of a vinylpyridine-styrene-butadiene (VPSBR) elastomer comprising units derived from monomers comprising styrene, 1,3- butadiene, and vinylpyridine monomers which have the structural formula: 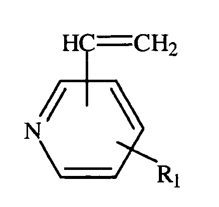
wherein R₁ represents a hydrogen atom or a straight chain or branched alkyl group containing 1 to 4 carbon atoms, wherein the VPSBR comprises from 0.1 to 8 percent by weight of vinylpyridine monomer;
from 0 to 50 phr of at least one additional diene-based elastomer;
from 5 to 15 phr of an at least partially exfoliated clay; and
from 1 to 40 phr of a polyoctenamer.

In one embodiment, the vinylpyridine monomer is selected from 2-vinylpyridine, 3-vinylpyridine, 4-vinylpyridine, 6-methyl-2-vinylpyridine, 6-methyl-3-vinylpyridine, 5-methyl-2-vinylpyridine and 5-ethyl-2-vinylpyridine, and mixtures thereof. Of these, 4-vinylpyridine is preferred.

Clays considered for use in this invention are clays which, prior to combination with the VPSBR, are composed of a plurality of stacked platelets (e.g., very thin silicate based platelets) which contain cationically exchangeable ions in the galleries between such platelets. Representative of such clays are water swellable smectite clays, vermiculite based clays and mica based clays. Included are both naturally occurring clays and synthetic clays. Also included in suitable clays include sepiolite and attapulgite clays. Suitable synthetic clays include the Laponite® clays from Southern Clay Products. Preferably such water-swellable clays are smectite clays. Representative of smectite clays are, for example, montmorillonite, hectorite, nontrite, beidellite, volkonskoite, saponite, sauconite, sobockite, sterensite, and sinfordite clays of which montmorillonite and hectorite clays are preferred.

In one embodiment, the VPSBR and clay are combined as a masterbatch prepared following the methods of US-A- 2008/0146719, fully incorporated herein by reference. As taught therein, a dispersion of at least partially exfoliated clay particles in an elastomer is provided by blending a water slurry of water-swellable multilayered clay (e.g., a smectite clay) with an emulsion latex of anionic (negatively charged) vinylpyridine-styrene-butadiene (VPSBR) terpolymer elastomer particles having a pH in a range of 6 to 11, preferably 7 to 10, and thereafter lowering the pH of the mixture to protonate the VPSBR to effect an ion exchange by the protonated vinylpyridine of the VPSBR with cationically exchangeable ion(s) contained within the galleries of the stacked platelets of the clay and thereby delaminate the clay and cause at least a partial exfoliation of the clay into individual clay platelets, and to coagulate the latex, all in situ. In practice, a small amount of acid, or salt/acid combination, is added to reduce the pH of the emulsion to a value, for example, in a range of from 1 to 4, preferably to 1 to 2, to aid in coagulating (precipitating) the elastomer particles and at least partially exfoliated clay as a nanocomposite.

The masterbatch may then simply be recovered by drying the coagulant, or precipitate.

In practice, the anionic (negatively charged) VPSBR elastomer particles may be formed, for example, by use of anionic surfactant(s) to stabilize the emulsion. Such use of anionic surfactants for such purpose is well known to those having skill in such art.

In practice, an acid, or salt/acid combination, often is used to reduce the pH of an anionic latex from a pH, for example, in a range of 6 to 11 to a more acidic value in a range of, for example, of 1 to 4 to therefore promote protonation of the VPSBR units derived from vinylpyridine monomer and consequent delamination of the clay, and a destabilization of the emulsion and promoting a coagulation, or precipitation, of the elastomer particles from the emulsion. A representative example of an acid, or salt/acid combination, for such purpose is, for example, sulfuric acid or a combination of sodium chloride and sulfuric acid.

Further, the aforesaid use of an acid, or salt/acid combination, can be beneficially used to aid in the coagulation process by reduction of the pH of the VPSBR emulsion/clay mixture while also inducing delamination of the clay by the consequently protonated VPSBR units derived from vinylpyridine monomer.

Accordingly, this invention is considered herein to be a significant departure from past practice by use of anionic VPSBR elastomer particles and water swelled, water-swellable clay, together with an acid, or salt acid combination, to effect both a coagulation/precipitation of the elastomer/clay particle composite and an in situ formation of ionic bonding between the elastomer and partially exfoliated clay particles.

Therefore, a significant aspect of this invention is the delamination or exfoliation of the water-swelled clay contained in an anionic emulsion of VPSBR elastomer particles, wherein the water-swelled clay contains cationically exchangeable ions (e.g., sodium ion) within the galleries between its platelets and wherein the delamination is accomplished by protonating the VPSBR units derived from vinylpyridine monomer to effect an ion transfer between the ions within the clay galleries and the protonated VPSBR units derived from vinylpyridine monomer.

A further significant aspect of the invention is the substantially simultaneous precipitation (coagulation) of the elastomer which contained dispersion of the delaminated (and at least partially exfoliated) clay particles as a nanocomposite which is aided by the addition of the acidic water to destabilize the emulsion.

Another significant aspect of the invention is the strong association between the elastomer and the largely delaminated clay particles through the ionic bonding of vinylpyridine along the elastomer chains and clay surface. This ionic association provides strong interphase which ensures better load transfer and better mechanical properties.

In an additional departure from past practice, the water-swellable clay is introduced into the emulsion of anionic VPSBR elastomer particles in a pre-water swelled form but without being first intercalated with an intercalant (e.g., a non-pre-intercalated clay as being a water-swelled clay which is not first intercalated with a quaternary ammonium salt to effect an ion exchange prior to its addition to the emulsion) so that the protonation of the vinylpyridine of the VPSBR is relied upon to delaminate and exfoliate the water-swelled clay by the aforesaid ion exchange in situ within the emulsion of anionic elastomer particles.

For the practice of this invention, it is intended that the clay delamination and exfoliation process for this invention is conducted in the presence of the anionic (negatively charged) elastomer latex particles and to the exclusion of cationic elastomer particles contained in a cationic surfactant.

In a summary, then, the process of this invention differs significantly from past practice, at least in part because the water-swellable clay (e.g., smectite clay) is
(A) not intercalated during the polymerization of the monomers,
(B) not intercalated by physically blending the smectite clay with the elastomer after it has been coagulated and recovered as a dry elastomer,
(C) not intercalated by blending a smectite clay which has been pre-intercalated by treatment with a quaternary ammonium salt prior to blending the pre-intercalated clay with the elastomer, and
(D) strongly associated with elastomer matrix through ionic bonding with protonated vinylpyridine groups.

Indeed, while some elements of the process of this invention might appear to be somewhat simplistic in operational nature, it is considered herein that the overall technical procedural application is a significant departure from past practice.

In the description of this invention, the term "phr" is used to designate parts by weight of a material per 100 parts by weight of elastomer. The terms "rubber" and "elastomer" may be used interchangeably unless otherwise indicated. The terms "vulcanized" and "cured" may be used interchangeably, as well as "unvulcanized" or "uncured," unless otherwise indicated.

In accordance with this invention, a process of preparing a masterbatch comprising an elastomer and at least partially exfoliated water-swellable clay, (in situ within an elastomer host of anionic elastomer particles), comprises
(A) forming a first blend of water-swelled clay and anionic polymer particle emulsion by blending:
   (1) an aqueous mixture comprising water and a multilayered water-swellable clay, exclusive of an intercalant for said clay (e.g., exclusive of a quaternary ammonium salt), wherein said water-swellable clay comprising a plurality of stacked platelets with water-expanded (swollen) galleries between said platelets, wherein said galleries contain naturally occurring cationically ion exchangeable ions therein, (e.g., montmorillonite clay which contains sodium ions within said galleries), and
   (2) an emulsion of anionic synthetic vinylpyridine-styrene-butadiene terpolymer (VPSBR) elastomer particles as an aqueous pre-formed elastomer emulsion having a pH in a range of from 6 to 11, preferably 7 to 10, comprising anionic elastomer particles (elastomer particles having anions on the surface derived from an anionic surfactant) prepared by aqueous free radical induced polymerization of monomers in the presence of a free radical generating polymerization initiator and non-polymerizable anionic surfactant, wherein said synthetic elastomer particles are derived from an aqueous polymerization of a vinylpyridine monomer, styrene and 1,3-butadiene, and
(B) blending with said first blend an aqueous mixture comprised of water and inorganic acid having a pH in a range of 1 to 4.

Water-swellable clays considered for use in this invention which are clays composed of a plurality of stacked platelets (e.g., very thin silicate based platelets) which contain cationically exchangeable ions in the galleries between such platelets. Representative of such clays are water swellable smectite clays, vermiculite based clays and mica based clays. Included are both naturally occurring clays and synthetic clays. Also included in suitable clays include sepiolite and attapulgite clays. Suitable synthetic clays include the Laponite® clays from Southern Clay Products. Preferably such water-swellable clays are smectite clays. Representative of smectite clays are, for example, montmorillonite, hectorite, nontrite, beidellite, volkonskoite, saponite, sauconite, sobockite, sterensite, and sinfordite clays of which montmorillonite and hectorite clays are preferred. For various exemplary smectite clays, see for example US-A- 5,552,469. Such cationically exchangeable ions contained in such galleries are typically comprised of at least one of sodium ions and potassium ions, which may also include calcium ions and/or magnesium ions, although it is understood that additional cationically exchangeable ions may be present. Typically, montmorillonite clay is preferred which contains sodium ions in such galleries, although it is understood that a minor amount of additional cationically exchangeable ions may be contained in such galleries such as for example, calcium ions.

In one aspect, a water swellable clay, such as for example a smectite clay such as, for example, a montmorillonite clay, for use in this invention, might be described, for example, as a naturally occurring clay of a structure which is composed of a plurality of stacked, thin and relatively flat, layers, where such individual layers may be of a structure viewed as being composed of very thin octahedral shaped alumina layer sandwiched between two very thin tetrahedrally shaped silica layers to form an aluminosilicate structure. Generally, for such aluminosilicate structure in the naturally occurring montmorillonite clay, some of the aluminum cations (Al⁺³) are viewed as having been replaced by magnesium cations (Mg⁺²) which results in a net negative charge to the platelet layers of the clay structure. Such negative charge is viewed as being balanced in the naturally occurring clay with hydrated sodium, lithium, magnesium, calcium and/or potassium cations, usually primarily sodium ions, within the spacing (sometimes referred to as "galleries") between the aforesaid aluminosilicate layers, or platelets.

In practice, the degree of exfoliation of the clay platelets can be qualitatively evaluated, for example, by wide angle X-ray diffraction (WAXD) as evidenced by a substantial absence of an X-ray peak which is a well known method of such evaluation. Such evaluation relies upon observing WAXD peak intensities and changes (increase) in the basal plane spacing between platelets.

In practice, preferably from 0.1 to 80, alternately 5 to 20, parts by weight of said water swelled clay is added to said anionic emulsion per 100 parts by weight of said elastomer particles, depending somewhat upon the nature of the clay including the cationically exchangeable ions within the galleries between the layers of the clay, and the VPSBR elastomer.

Accordingly, the resulting nanocomposite may contain 0.1 to 80, alternately 5 to 20, parts by weight of at least partially exfoliated clay particles per 100 parts by weight of the elastomer host.

It is to be appreciated that, in practice, a synthetic emulsion of anionic VPSBR elastomer particles may be prepared, for example, by emulsion polymerization of a vinylpyridine monomer, styrene and 1,3-butadiene monomers, in a water emulsion medium via a free radical polymerization in the presence of an anionic surfactant.

It is to be further appreciated that a VPSBR made by the process described herein comprises units derived from vinylpyridine monomer, styrene and 1,3-butadiene monomers, in the sense that upon incorporation into the VPSBR polymer chain, the VPSBR units derived from the monomers differ in structure somewhat from the monomers, owing to the polymerization reaction. Thus, reference herein to "units derived from monomers" and the like is understood to mean units incorporated into the VPSBR chain that have their origin in the vinylpyridine monomer, styrene and 1,3-butadiene monomers.

In further accordance with this invention, said monomers for said synthetic elastomer particles are derived from aqueous emulsion polymerization of vinylpyridine monomer, styrene and 1,3-butadiene monomers comprised of from 0.1 to 40, alternately 15 to 35, weight percent styrene monomer; from 0.1 to 8, alternately from 0.5 to 4, weight percent vinylpyridine monomer, and the balance 1,3 butadiene monomer.

In one embodiment, suitable vinylpyridine monomers have the structural formula: 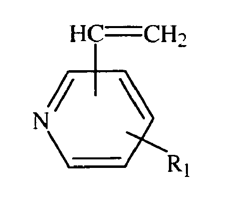 wherein R₁ represents a hydrogen atom or a straight chain or branched alkyl group containing 1 to 4 carbon atoms. In one embodiment, the vinylpyridine monomer may be selected from 2-vinylpyridine, 3-vinylpyridine, 4-vinylpyridine, 6-methyl-2-vinylpyridine, 6-methyl-3-vinylpyridine, 5-methyl-2-vinylpyridine and 5-ethyl-2-vinylpyridine, and mixtures thereof. Of these 4-vinylpyridine is preferred.

Representative examples of anionic surfactants for the preparation of the synthetic emulsion of anionic VPSBR elastomer particles may be found, for example, in McCutcheon's, Volume 1, "Emulsifiers & Detergents", North American Edition, 2001, Pages 291 and 292, with representative examples of non-ionic surfactants shown on Pages 294 through 300 and examples of cationic surfactants shown on Pages 300 and 301.

For the practice of this invention, cationic surfactants for the preparation of the synthetic elastomer particles are to be excluded.

As hereinbefore described, in practice, the emulsion of anionic VPSBR elastomer particles may be prepared, for example, by a free radical polymerization of the monomers in a water-based medium in the presence of a free radical initiator and said anionic surfactant(s). A general description of an aqueous emulsion polymerization of styrene and 1,3-butadiene directed to an anionic surfactant (emulsifier) based polymerization, may be found, for example, in The Vanderbilt Rubber Handbook, 1978 Edition, Pages 55 through 61. A general description of the micelle-generating substances (emulsifiers, surfactants, soaps) is given in Emulsion Polymerization Theory and Practice by D. C. Blackley, 1975, Pages 251 through 328. It is to be understood that the procedures are fully applicable to the present VPSBR.

The use of various free radical generating initiators for aqueous emulsion of styrene/butadiene monomer systems to form styrene/butadiene elastomers is well known to those having skill in such art.

In practice, said free radical generating polymerization initiator for preparation of said synthetic elastomer particles may be selected from, for example,
(A) dissociative initiators, or
(B) redox initiators as described in the above referenced "Emulsion

### Polymerization Theory and Practice."

Such free radical generating polymerization initiators are well known to those having skill in such art.

The practice of emulsion polymerization of SBR (and by extension, of VPSBR) may be classified into two types. The hot polymerization is based on dissociative initiators and is typically run at 50°C to 70°C. The cold polymerization is based on redox initiators and is typically run at temperatures less than 10°C, preferably 5°C. The type of process sets the polymerization temperature. The polymerization temperature affects the macrostructure and microstructure. Emulsion SBR prepared via a hot polymerization will have a trans-1,4-butadiene content of 60 percent or less and higher branching. Emulsion SBR prepared via a cold process will have a higher trans-1,4-butadiene content and lower branching. The emulsion SBR from cold polymerization process will typically have an trans-1,4-butadiene content of greater than about 60 percent by weight, based on the polybutadiene content of the polymer. Therefore, in one embodiment, the trans-1,4-butadiene content of the VPSBR ranges from about 60 percent to about 80 percent by weight. In one embodiment, the trans-1,4-butadiene content of the VPSBR ranges from about 65 percent to about 75 percent. In one embodiment, the trans-1,4-butadiene content of the VPSBR ranges from about 68 percent to about 72 percent.

Higher trans-1,4 content in excess of 72 percent in the VPSBR may be achieved using a cryogenic polymerization as disclosed for example in J.L. Binder, Ind. Eng. Chem. 46, 1727 (1954).

In one preferred embodiment, the free radical polymerization is a so-called "cold" polymerization, as opposed to a hot polymerization. The amount of free radical initiator used is sufficient to give a reasonable reaction rate, with monomer conversion up to about 60 to 65 percent in 6 hours. In contrast to the hot polymerization typically used commercially for RFL adhesive-type vinylpyridine-styrene-butadiene latexes with about 15 percent by weight of 2-vinylpyridine in the polymer, the cold polymerization results in a VPSBR with a lower amount of gel and branching resulting in desirable physical properties for the present tire application.

In practice, said inorganic acid for adding to said first blend may be selected from mineral acids such as for example, sulfuric acid, nitric acid, hydrochloric acid and phosphoric acid. Also, organic acids such as, for example, formic acid, and acetic acid may be used, although the mineral acids are preferred.

In practice, for said acid/salt combination, said aqueous mixture of water and acid, preferably an inorganic acid, may, if desired, also contain a water soluble salt selected from, for example, at least one of sodium chloride, potassium chloride, sodium sulfate, potassium sulfate, magnesium chloride, magnesium sulfate, aluminum sulfate, potassium carbonate and tripotassium phosphate.

In practice, said water for said aqueous mixture of water and water swellable clay is preferably provided in a de-mineralized form, or at least without an appreciable mineral content.

In practice, it is to be appreciated that the method of this invention may desirably rely, at least in part, on the use of the acid or salt/acid combination to aid in destabilizing the anionic emulsion and thereby coagulating/precipitating the anionic elastomer particles/clay particle mixture. At the same time, the acid or salt/acid combination acts to protonate the VPSBR units derived from vinylpyridine monomer, with subsequent ion exchange with cations in the clay by the protonated moiety to delaminate the clay.

In further accordance with this invention, a masterbatch is provided which comprises at least the VPSBR which contains a dispersion therein of at least partially exfoliated clay particles.

In additional accordance with this invention, a masterbatch comprising an elastomer which contains a dispersion therein of said in situ formed partially exfoliated water swellable clay is provided as prepared by the process of this invention.

Accordingly, as hereinbefore discussed, said masterbatch may comprise, based on 100 parts by weight of the elastomer host, from 0.1 to 80, 5 to 80 or, alternately 5 to 20, parts by weight of said in situ formed at least partially exfoliated clay.

One component of the rubber composition is a polyoctenamer. Suitable polyoctenamer may include cyclic or linear macromolecules based on cyclooctene, or a mixture of such cyclic and linear macromolecules. Suitable polyoctenamer is commercially available as Vestenamer 8012 or V6213 from Degussa AG High Performance Polymers. Vestenamer is a polyoctenamer produced in a methathesis reaction of cyclooctene. In one embodiment, the octenamer may have at least one of a weight averaged molecular weight of 90,000 to 110,000; a glass transition temperature of from -65°C to -75°C; a crystalline content of from 10 to 30 percent by weight; a melting point of from 36°C to 54°C; a thermal decomposition temperature of from 250°C to 275°C; a cis/trans ratio of double bonds of from 20:80 to 40:60; and Mooney viscosity ML 1 +4 of less than 10.

In one embodiment, polyoctenamer is added in an amount ranging from 1 to 40 percent by weight of the total rubber or elastomer used in the rubber composition, or 1 to 40 phr (parts per hundred rubber). For example, 1 to 40 phr polyoctenamer may be used along with 100 phr of at least one other elastomer. Alternatively, from 5 phr to 30 phr polyoctenamer is added to the rubber composition.

The rubber composition may be used with additional rubbers or elastomers containing olefinic unsaturation. The phrases "rubber or elastomer containing olefinic unsaturation" or "diene-based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred additional diene-based elastomers are polyisoprene (natural or synthetic), polybutadiene and SBR.

In one embodiment, the rubber composition comprises from 0 to 50 phr, alternately from 5 to 40 phr, of at least one additional diene-based elastomer.

In one aspect of this invention, an emulsion polymerization derived styrene/butadiene (E-SBR) might be used having a relatively conventional styrene content of about 20 to about 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) is used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). Preferably, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210, or 243; silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black is used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including but not limited to those disclosed in US-A-6,242,534; US-A- 6,207,757; US-A- 6,133,364; US-A- 6,372,857; US-A-5,395,891; or US-A- 6,127,488, and plasticized starch composite filler including, but not limited to, that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-Sₙ-Alk-Z III

in which Z is selected from the group consisting of 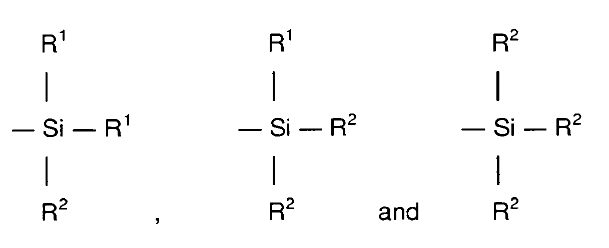 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula III, Z may be 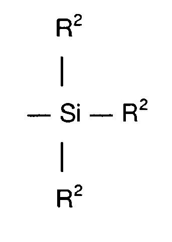 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator are used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may be a radial or bias.

Vulcanization of the pneumatic tire of the present invention is generally carried out at conventional temperatures ranging from 100°C to 200°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following example.

### Example 1

In this example, the effect of adding a polyoctenamer to a VPSBR/clay nanocomposite masterbatch is illustrated. Rubber compositions were prepared for evaluating the effect of introducing a small quantity of polyoctenamer into the clay nanocomposite rubber composition. The rubber compositions were prepared by mixing the ingredients in two sequential non-productive (NP) and productive (PR) mixing steps in an internal rubber mixer. The dump temperature for NP was 170°C. The dump temperature for PR was 120°C. Polyoctenamer was introduced during the non-productive stage of mixing.

The basic recipe for the rubber samples is presented in the following Table 1 and recited in parts by weight unless otherwise indicated.

**Table 1**

| ***Non-Productive Mixing Step (NP1), (mixed to about 170°C)*** | Parts |
|---|---|
| 4VP ESBR/7.5 phr clay masterbatch¹ | Variable |
| 4VP ESBR/10 phr clay masterbatch² | Variable |
| Polyoctenamer³ | Variable |
| Silane coupling agent⁴ | Variable |
| Wax and protective agents | 3.5 |
| Stearic acid | 3 |
| Zinc oxide | 3 |

| ***Productive Mixing Step (PR), (mixed to about 120°C)*** | |
|---|---|
| Sulfur | 1.5 |
| Sulfenamide based cure accelerator | 1.2 |
| Antioxidant | 0.75 |
| Thiuram based cure accelerator | 0.13 |

| | |
|---|---|
| ¹ ESBR functionalized with 2.5 percent by weight 4-vinylpyridine (4-VP) /7.5 phr clay masterbatch prepared following procedures as outlined in US Patent Application No. 2008/0146719 from Goodyear Tire & Rubber Co. ² ESBR functionalized with 2.5 percent by weight 4-vinylpyridine (4-VP) /10 phr clay masterbatch prepared following procedures as outlined in US Patent Application No. 2008/0146719 from Goodyear Tire & Rubber Co. ³ Polyoctenamer commercially known as Vestenamer 8012 with a melting point of 54°C from the Degussa Company ⁴ A 50/50 blend of carbon black N330 and disulfide silane coupling agent commercially known as X266S from the Degussa Company | |

The following Table 2 illustrates processing characteristics and various physical properties of rubber compositions based upon the basic recipe of Table 1.

Samples A and D are comparative rubber samples containing 4-VP ESBR/7.5 phr clay masterbatch (4VP ESBR/7.5 MB) and 4-VP ESBR/10 phr clay masterbatch (4VP ESBR/10 MB), respectively. Experimental rubber samples B and C contain 5 and 10 phr of polyoctenamer, respectively, with sample A being the comparative sample. Experimental rubber samples E and F contain 5 and 10 phr of polyoctenamer, respectively, with sample D being the comparative sample.

It can be seen from Table 2 that the comparative rubber samples A and D containing 4-VP ESBR/clay nanocomposite exhibited undesirable processing characteristics as indicated from the relatively high uncured modulus G' of 0.226 and 0.255 MPa, respectively. The introduction of polyoctenamer into the 4-VP ESBR nanocomposite rubber composition led to reduced uncured modulus G', indicative of improved processibility of the rubber composition. Surprisingly, the abrasion resistance performance of the rubber composition, measured from the DIN abrasion as well as from the Grosch abrasion, was significantly enhanced from the use of polyoctenamer as shown from the comparison of Experimental rubber samples B,C,E and F with the comparative samples A and D, while the compound properties associated with tire rolling resistance and compound heat build up, such as tan delta at high temperature and rebound were not significantly negatively affected. Other desirable compound properties, such as dynamic and static stiffness and Shore A hardness were essentially maintained or improved.

**Table 2**

| | A | B | C | D | E | F |
|---|---|---|---|---|---|---|
| 4VP ESBR/7.5 MB (phr) | 107.5 | 107.5 | 107.5 | 0 | 0 | 0 |
| 4VP ESBR/10 MB (phr) | 0 | 0 | 0 | 110 | 110 | 110 |
| X266S (phr) | 1.2 | 1.2 | 1.2 | 1.6 | 1.6 | 1.6 |
| Vestenamer 8012 (phr) | 0 | 5 | 10 | 0 | 5 | 10 |

| ***Rheometer¹. 150°C*** | | | | | | |
|---|---|---|---|---|---|---|
| Maximum torque (dNm) | 12.94 | 12.26 | 12.04 | 12.99 | 12.13 | 11.58 |
| Minimum torque (dNm) | 1.87 | 1.65 | 1.58 | 2.23 | 2.07 | 1.88 |
| Delta torque (dNm) | 11.04 | 10.61 | 10.46 | 10.76 | 10.05 | 9.70 |
| T90 (minutes) | 12.43 | 13.22 | 15.09 | 23.93 | 26.10 | 28.15 |

| ***RPA Analysis, 100 °C*** | | | | | | |
|---|---|---|---|---|---|---|
| Uncured G' at 15% strain, MPa | 0.226 | 0.194 | 0.187 | 0.255 | 0.238 | 0.214 |
| G' at 1 % strai n, M Pa | 1.20 | 1.10 | 1.08 | 1.20 | 1.16 | 1.09 |
| G' at 10% strain, MPa | 1.01 | 0.94 | 0.92 | 0.91 | 0.87 | 0.83 |
| Tan delta at 10% strain | 0.059 | 0.063 | 0.066 | 0.092 | 0.095 | 0.098 |

| ***Stress-strain. ATS. 16 min, 160°C²*** | | | | | | |
|---|---|---|---|---|---|---|
| Tensile strength (MPa) | 16.6 | 13.6 | 14.2 | 17.5 | 15.0 | 11.8 |
| Elongation at break (%) | 364 | 351 | 394 | 365 | 321 | 269 |
| 100% modulus (MPa) | 2.8 | 2.7 | 2.8 | 3.2 | 3.2 | 3.5 |
| 300 % modulus (MPa) | 14.9 | 12.7 | 11.9 | 15.8 | 15.5 | |

| ***Rebound*** | | | | | | |
|---|---|---|---|---|---|---|
| 23°C | 56.5 | 56.0 | 55.3 | 54.2 | 55.3 | 55.1 |
| 100 °C | 70.6 | 69.2 | 66.9 | 66.8 | 66.7 | 65.2 |

| ***Shore A Hardness*** | | | | | | |
|---|---|---|---|---|---|---|
| 23°C | 65 | 66 | 67 | 68 | 69 | 70 |
| 100°C | 57 | 57 | 55 | 60 | 58 | 57 |
| DIN Abrasion Vol. Loss, 23°C | 91 | 80 | 50 | 89 | 78 | 54 |
| Grosch Loss Rate, 23°C, mg/km | 493 | 422 | 361 | 441 | 405 | 367 |

| | | | | | | |
|---|---|---|---|---|---|---|
| ¹Data according to Rubber Process Analyzer as RPA 2000™ instrument by Alpha Technologies, formerly of the Flexsys Company and formerly of the Monsanto Company. References to an RPA 2000 instrument may be found in the following publications: H. A. Palowski, et al, Rubber World, June 1992 and January 1997, as well as Rubber & Plastics News, April 26 and May 10, 1993. ²Data according to Automated Testing System instrument by the Instron Corporation which incorporates six tests in one system. Such instrument may determine ultimate tensile, ultimate elongation, moduli, etc. Data reported in the Table is generated by running the ring tensile test. | | | | | | |

This example demonstrates the desirability and benefits of the use of polyoctenamer in a clay nanocomposite and a tire for enhanced compound abrasion resistance and processibility without significant compromise in other desirable compound properties.

## Claims

1. A rubber composition comprising from 50 to 100 parts by weight, per 100 parts by weight of elastomer, of a vinylpyridine-styrene-butadiene (VPSBR) elastomer comprising units derived from monomers comprising styrene, 1,3-butadiene, and vinylpyridine monomers which have the structural formula: 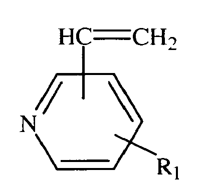
wherein R₁ represents a hydrogen atom or a straight chain or branched alkyl group containing 1 to 4 carbon atoms, wherein the VPSBR comprises from 0.1 to 8 percent by weight of vinylpyridine monomer;
from 0 to 50 phr of at least one additional diene-based elastomer;
from 5 to 15 phr of an at least partially exfoliated clay; and
from 1 to 40 phr of a polyoctenamer.

2. The rubber composition of claim 1, wherein the vinylpyridine monomer comprises a member selected from the group consisting of 2-vinylpyridine, 3 vinylpyridine, 4-vinylpyridine, 6-methyl-2-vinylpyridine, 6-methyl-3-vinylpyridine, 5 - methyl-2-vinylpyridine and 5-ethyl-2-vinylpyridine, and mixtures thereof.

3. The rubber composition of claim 1 or 2, wherein the VPSBR comprises from 0.5 to 4 percent by weight of units derived from vinylpyridine monomer.

4. The rubber composition of claim 3, wherein the VPSBR comprises from 0.5 to 2 percent by weight of units derived from vinylpyridine monomer.

5. The rubber composition of at least one of the previous claims, wherein the rubber composition further comprises from 10 to 100 phr of a filler selected from silica and carbon black.

6. The rubber composition of at least one of the previous claims, wherein the VPSBR comprises from 60 percent to 80 percent by weight of trans-1,4-butadiene, based on the polybutadiene content of the VPSBR.

7. The rubber composition of claim 6, wherein the VPSBR comprises from 65 percent to 75 percent by weight of trans-1,4-butadiene, based on the polybutadiene content of the VPSBR.

8. The rubber composition of claim 7, wherein the VPSBR comprises from 68 percent to 72 percent by weight of trans-1,4-butadiene, based on the polybutadiene content of the VPSBR.

9. The rubber composition of at least one of the previous claims wherein the clay is selected from the group consisting of montmorillonite, hectorite, nontrite, beidellite, volkonskoite, saponite, sauconite, sobockite, sterensite, sinfordite, sepiolite, attapulgite, and synthetic clays.

10. The rubber composition of at least one of the previous claims, wherein the at least one additional diene-based elastomer is selected from the group consisting of cis 1,4-polyisoprene (natural and synthetic), cis 1,4-polybutadiene, styrene/butadiene copolymers (aqueous emulsion polymerization prepared and organic solvent solution polymerization prepared), vinyl polybutadiene having a vinyl 1,2-content in a range of about 15 to about 90 percent, isoprene/butadiene copolymers, and styrene/ isoprene/butadiene terpolymers.

11. A pneumatic tire comprising a component comprising the rubber composition of one of the previous claims.

12. The tire of claim 11 wherein the component is selected from the group of a tread, a sidewall, an apex, a sidewall insert and a carcass.

13. The tire of claim 12 wherein the component is a tread.

## Patentansprüche

1. Kautschukzusammensetzung, umfassend 50 bis 100 Gewichtsteile, je 100 Gewichtsteile Elastomer, eines Vinylpyridin-Styrol-Butadien(VPSBR)-Elastomers, umfassend Einheiten, die abgeleitet sind von Monomeren, umfassend Styrol, 1,3-Butadien und Vinylpyridin-Monomere mit der Strukturformel: 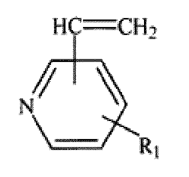
wobei R₁ ein Wasserstoffatom oder eine geradkettige oder verzweigte Alkylgruppe, die 1 bis 4 Kohlenstoffatome enthält, darstellt, wobei das VPSBR 0,1 bis 8 Gewichtsprozent Vinylpyridinmonomer umfasst;
0 bis 50 ThK mindestens eines zusätzlichen dienbasierten Elastomers;
5 bis 15 ThK eines mindestens teilweise expandierten Tons; und
1 bis 40 ThK eines Polyoctenamers.

2. Kautschukzusammensetzung nach Anspruch 1, wobei das Vinylpyridinmonomer ein Strukturglied enthält, ausgewählt aus der aus 2-Vinylpyridin, 3-Vinylpyridin, 4-Vinylpyridin, 6-Methyl-2-Vinylpyridin, 6-Methyl-3-Vinylpyridin, 5-Methyl-2-Vinylpyridin und 5-Ethyl-2-Vinylpyridin und Mischungen davon bestehenden Gruppe.

3. Kautschukzusammensetzung nach Anspruch 1 oder 2, wobei das VPSBR 0,5 bis 4 Gewichtsprozent von Vinylpyridinmonomer abgeleitete Einheiten umfasst.

4. Kautschukzusammensetzung nach Anspruch 3, wobei das VPSBR 0,5 bis 2 Gewichtsprozent von Vinylpyridinmonomer abgeleitete Einheiten umfasst.

5. Kautschukzusammensetzung nach mindestens einem der vorgenannten Ansprüche, wobei die Kautschukzusammensetzung weiter 10 bis 100 ThK eines aus Silika und Carbon Black ausgewählten Füllstoffs umfasst.

6. Kautschukzusammensetzung nach mindestens einem der vorgenannten Ansprüche, wobei das VPSBR 60 Gewichtsprozent bis 80 Gewichtsprozent trans-1,4-Butadien enthält, basiert auf dem Polybutadiengehalt des VPSBR.

7. Kautschukzusammensetzung nach Anspruch 6, wobei das VPSBR 65 Gewichtsprozent bis 75 Gewichtsprozent trans-1,4-Butadien enthält, basiert auf dem Polybutadiengehalt des VPSBR.

8. Kautschukzusammensetzung nach Anspruch 7, wobei das VPSBR 68 Gewichtsprozent bis 72 Gewichtsprozent trans-1,4-Butadien enthält, basiert auf dem Polybutadiengehalt des VPSBR.

9. Kautschukzusammensetzung nach mindestens einem der vorgenannten Ansprüche, wobei der Ton aus der aus Montmorillonit, Hektorit, Nontrit, Beidellit, Volkonskoit, Saponit, Saukonit, Sobockit, Sterensit, Sinfordit, Sepiolit, Attapulgit und synthetischen Tonen bestehenden Gruppe ausgewählt ist.

10. Kautschukzusammensetzung nach mindestens einem der vorgenannten Ansprüche, wobei das mindestens eine zusätzliche dienbasierte Elastomer aus der aus cis-1,4-Polyisopren (natürlich und synthetisch), cis-1,4-Polybutadien, Styrol-Butadien-Copolymeren (durch wässrige Emulsionspolymerisation hergestellt und durch organische Lösungsmittel-Lösungspolymerisation hergestellt), Vinylpolybutadien mit einem Vinyl-1,2-Gehalt in einem Bereich von etwa 15 bis etwa 90 Prozent, Isopren-Butadien-Copolymeren und Styrol-Isopren-Butadien-Terpolymeren bestehenden Gruppe ausgewählt ist.

11. Luftreifen, umfassend ein Bauteil, das die Kautschukzusammensetzung von einem der vorgenannten Ansprüche umfasst.

12. Reifen nach Anspruch 11, wobei das Bauteil aus der Gruppe einer Lauffläche, einer Seitenwand, eines Kernprofils, eines Seitenwandeinsatzes und einer Karkasse ausgewählt ist.

13. Reifen nach Anspruch 12, wobei das Bauteil eine Lauffläche ist.

## Revendications

1. Composition de caoutchouc comprenant, à concurrence de 50 à 100 parties en poids, par 100 parties en poids d'élastomère, un élastomère de vinylpyridine-styrènebutadiène (VPSBR) comprenant des unités qui dérivent de monomères comprenant des monomères de styrène, du 1,3-butadiène et de vinylpyridine, répondant à la formule développée : 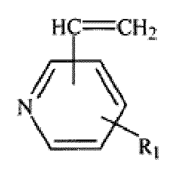 dans laquelle R₁ représente un atome d'hydrogène ou un groupe alkyle à chaîne droite ou ramifiée contenant de 1 à 4 atomes de carbone, le VPSBR comprenant le monomère de vinylpyridine à concurrence de 0,1 à 8 % en poids, au moins un élastomère supplémentaire à base diénique à concurrence de 0 à 50 phr, au moins une argile partiellement exfoliée à concurrence de 5 à 15 phr et un polyocténamère à concurrence de 1 à 40 phr.

2. Composition de caoutchouc selon la revendication 1, dans laquelle le monomère de vinylpyridine comprend un membre choisi parmi le groupe constitué par la 2-vinylpyridine, la 3-vinylpyridine, la 4-vinylpyridine, la 6-méthyl-2-vinylpyridine, la 6-méthyl-3-vinylpyridine, la 5-méthyl-2-vinylpyridine et la 5-éthyl-2-vinylpyridine et leurs mélanges.

3. Composition de caoutchouc selon la revendication 1 ou 2, dans laquelle le VPSBR comprend des unités qui dérivent d'un monomère de vinylpyridine à concurrence de 0,5 à 4 % en poids.

4. Composition de caoutchouc selon la revendication 3, dans laquelle le VPSBR comprend des unités qui dérivent d'un monomère de vinylpyridine à concurrence de 0,5 à 2 % en poids.

5. Composition de caoutchouc selon au moins une des revendications précédentes, dans laquelle la composition de caoutchouc comprend en outre une matière de charge choisie parmi la silice et le noir de carbone, à concurrence de 10 à 100 phr.

6. Composition de caoutchouc selon au moins une des revendications précédentes, dans laquelle le VPSBR comprend du trans-1,4-butadiène à concurrence de 60 à 80 % en poids, basés sur la teneur du VPSBR en polybutadiène.

7. Composition de caoutchouc selon la revendication 6, dans laquelle le VPSBR comprend du trans-1,4-butadiène à concurrence de 65 à 75 % en poids, basés sur la teneur du VPSBR en polybutadiène.

8. Composition de caoutchouc selon la revendication 7, dans laquelle le VPSBR comprend du trans-1,4-butadiène à concurrence de 68 à 72 % en poids, basés sur la teneur du VPSBR en polybutadiène.

9. Composition de caoutchouc selon au moins une des revendications précédentes, dans laquelle l'argile est choisie parmi le groupe constitue par la montmorillonite, l'hectorite, la nontrite, la beidelite, la volkonskoïte, la saponite, la sauconite, la sobockite, la stérensite, la sinfordite, la sépiolite, l'attapulgite et des argiles synthétiques.

10. Composition de caoutchouc selon au moins une des revendications précédentes, dans laquelle ledit au moins un élastomère supplémentaire à base diénique est choisi parmi le groupe constitué par le cis-1,4-polyisoprène (naturel et synthétique), le cis-1,4-polybutadiène, des copolymères de styrène/butadiène (préparés par polymérisation en émulsion aqueuse et préparés par polymérisation dans une solution d'un solvant organique), du vinylpolybutadiène possédant une teneur en vinyl-1,2 dans la plage d'environ 15 à environ 90 %, des copolymères d'isoprène/butadiène et des terpolymères de styrène/isoprène/butadiène.

11. Bandage pneumatique comprenant un composant comprenant la composition de caoutchouc selon l'une quelconque des revendications précédentes.

12. Bandage pneumatique selon la revendication 11, dans lequel le composant est choisi parmi le groupe comprenant une bande de roulement, un flanc, un bourrage sur tringle, une pièce rapportée de flanc et une carcasse.

13. Bandage pneumatique selon la revendication 12, dans lequel le composant est une bande de roulement.
